(19) Europäisches Patentamt / European Patent Office / Office européen des brevets

(11) **EP 4 386 175 A1**

(12) **EUROPEAN PATENT APPLICATION**

(43) Date of publication:
**19.06.2024 Bulletin 2024/25**

(21) Application number: **22306918.8**

(22) Date of filing: **16.12.2022**

(51) International Patent Classification (IPC):
**E21B 17/01** (2006.01)   **E21B 17/10** (2006.01)
**F16L 3/015** (2006.01)   **F16L 1/12** (2006.01)

(52) Cooperative Patent Classification (CPC):
**E21B 17/017; E21B 17/105; H02G 3/0475**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nexans**
**92400 Courbevoie (FR)**

(72) Inventor: **SVAROD, Ulf**
**1798 Aremark (NO)**

(74) Representative: **Ipsilon**
**Le Centralis**
**63, avenue du Général Leclerc**
**92340 Bourg-la-Reine (FR)**

(54) **BEND RESTRICTOR**

(57)   A bend restrictor for restricting the bending of a cable comprising at least two pipe section (48) and at least one clamp section (46), wherein the pipe section (48) comprises an outward facing flange at each end, and at least an additional outward facing flange arranged between the end flanges, wherein the clamp section (46) comprises an inward facing flange at each end, and a pipe shaped middle section therebetween, wherein the distance between the outward facing end flange and the additional outward facing flange of the pipe section (48) is adapted to receive the inward facing flange of the clamp section (46).

Fig. 7b

EP 4 386 175 A1

**Description**

**Field of the invention**

The present invention relates to a bend restrictor, especially to a bend restrictor for a cable.

**Background**

During the handling and installation of a cable, both offshore and onshore, it is challenging to ensure that the cable is not damaged. It doesn't take much to over-bend or kink a cable, especially when the cable has a heavy and/or large termination unit at the end of the cable or cable jointing unit anywhere along the cable length.

A cable accessory, commonly called Bend Limiter or Bend Restrictor, is a common product in the offshore cable industry.

A bend restrictor is usually attached to the cable termination unit and to both ends of a cable jointing unit. To protect the cable from over-bending, the bend restrictor encloses the cable in a certain length and it is flexible up to a certain point where it locks into a rigid arc that has a certain radius called a locking radius.

Bend restrictors are usually made of steel, plastic or a composite material, but regardless of the material the existing bend restrictors designs today are more or less based on the same geometric concept.

**Prior art**

EP3564569A1 relates to a bend restrictor The bend restrictor comprises at least one pipe section and at least one clamp section wherein the pipe section comprises an outward facing flange at each end, the pipe section is split in the longitudinal direction into at least two parts, wherein the clamp section comprises an inward facing flange at each end and a pipe shaped middle section therebetween, wherein the clamp section is split in the longitudinal direction into at least two parts, wherein said parts are connectable through bolt connections, or through locking pin connections or through straps and wherein each inward facing flange is adapted to receive the outward facing flange of a pipe section.

NO320897 discloses a bend restrictor comprising pipe sections consisting of two halves connectable through bolt connections. The pipe sections comprise an outward directed flange at each end of the pipe section. The pipe sections are interconnected by clamps which consist of two halves connectable through bolt connections. The clamps have an inward facing flange adapted to receive the outward facing flange of two adjacent pipe sections. Both the pipe sections and the clamps are split in halves in the longitudinal direction. Each pipe section and each clamp are equipped with sacrificial anodes as they are prepared of metal that would otherwise not withstand humid conditions including subsea installation.

Prior art solutions are usually made of heavy single elements, which increase the difficulty and time required for the assembly of the bend restrictor. In addition, the prior art bend restrictor has a total weight that is quite high, which means that much of the structural capacity of the prior art bend restrictor must be used to support itself in addition to supporting the cable.

The present invention attempts to solve this challenge, or at least to improve on existing solutions.

**SUMMARY OF THE INVENTION**

An objective of the present invention is to provide a bend restrictor with reduced cost and installation time.

According to a first aspect, the invention relates to a bend restrictor for restricting the bending of a cable comprising at least one pipe section and at least one clamp section

- wherein each pipe section comprises an outward facing flange at each end, and at least an additional outward facing flange arranged between the end flanges,

- wherein the clamp section comprises an inward facing flange at each end, and a pipe shaped middle section therebetween,

wherein the distance between each of the outward facing end flanges and the additional outward facing flange of the pipe section is adapted to receive the inward facing flange of the clamp section.

Here, "the distance between each of the outward facing end flanges and the additional outward facing flange of the pipe section" refers to the distance between each of the outward facing end flanges and its respectively closest additional outward facing flange.

In an embodiment, the outward facing end flange may be a circular flange.

In an embodiment, the additional outward facing flange may be a circular flange.

In an embodiment, the locking radius of the bend restrictor is equal to or over the minimum allowable bending radius of the cable.

The bend restrictor is flexible up to a certain point where it locks into a rigid arc that has a certain radius called a locking radius.

In an embodiment, the distance between the end flange and the additional outward facing flange on the pipe section enables the inward facing flange on the clamp section, when in use, to move in a section between the end flange and the additional outward facing flange of the pipe section so that the bend restrictor does not allow the cable to be bent below the minimum allowable bending radius of the cable.

In an embodiment, the distance between the outward facing end flange and the additional outward facing flange of the pipe section may be larger than the width of the inward facing flange of the clamp section, so that the axes of the pipe section and the adjacent clamp section can have an inclination relative to each other.

In an embodiment, the distance between the outward facing end flange and the adjacent additional outward facing flange of the pipe section may be larger than the width of the inward facing flange of the clamp section, so that a position of the central axis of the pipe section to the central axis of the adjacent clamp section can vary between a first and second positions, wherein in the first position the axes are aligned and in the second position the axes are inclined relative to each other.

In an embodiment, a maximum angle between adjacent clamp and pipe sections is the angle between the central axis of the pipe section and the central axis of the adjacent clamp section and the angle is comprised between 0.5 and 15 degrees; 1 and 12 degrees; or 1.5 and 9 degrees.

In an embodiment, the pipe section may comprise an outward facing flange at each end, and at least two additional outward facing flanges arranged between the end flanges.

In an embodiment, the pipe section may be split in the longitudinal direction into at least two parts.

In an embodiment, the at least two parts of the pipe section may be connectable through bolt connections, or through locking pin connections or through straps.

In an embodiment, the clamp section may be split in the longitudinal direction into at least two parts.

In an embodiment, the at least two parts of the clamp section may be connectable through bolt connections, or through locking pin connections or through straps.

In an embodiment, the clamp section may be made of a rigid material. In other words, the clamp section may not be made of an elastic material.

In an embodiment, the pipe section may be made of a rigid material. In other words, the clamp section may not be made of an elastic material.

In an embodiment, the clamp section may comprise a structural steel, a polymer or a fibre-reinforced polymer material.

In an embodiment, the pipe section may comprise a structural steel, a polymer or a fibre-reinforced polymer material.

In an embodiment, the pipe shaped middle section of the clamp section may feature at least one aperture, thereby reducing the weight of the clamp section.

In an embodiment, the pipe shaped middle section of the clamp section may comprise a plurality of elongated elements extending between the two inward facing flanges. In an embodiment, the elongated elements may not be in contact with each other. In other words, there may be space between the elongated elements. This allows to further reduce the weight of the clamps, while continuing to protect the cable.

## Brief description of the drawings

The present invention will now be described in further details with reference to the enclosed drawings. A person skilled in the art will appreciate that different features illustrated in different embodiments may be combined to provide further embodiments of the present invention.

Figure 1a is a schematic cross-sectional view of a first prior art bend restrictor.

Figure 1b illustrates the clamp and the pipe sections of the first prior art bend restrictor.

Figure 2a is a schematic cross-sectional view of a second prior art bend restrictor.

Figure 2b illustrates the clamp and the pipe sections of the second prior art bend restrictor.

Figure 3a is a schematic cross-sectional view of a third prior art bend restrictor.

Figure 3b illustrates the clamp and the pipe sections of the third prior art bend restrictor.

Figure 4a is a schematic cross-sectional view of a bend restrictor according to the first embodiment.

Figure 4b illustrates the clamp and the pipe sections of the first embodiment of the bend restrictor.

Figure 5a is a schematic cross-sectional view of a bend restrictor according to the second embodiment.

Figure 5b illustrates the clamp and the pipe sections of the second embodiment of the bend restrictor.

Figure 6a is a cross-sectional view of a bend restrictor according to the first embodiment.

Figure 6b is a side view of a bend restrictor according to the first embodiment.

Figure 6c is a detail view of figure 6a.

Figure 6d is another detail view of figure 6a.

Figure 7a is a cross-sectional view of a bend restrictor according to the second embodiment.

Figure 7b is a side view of a bend restrictor according to the second embodiment.

## Detailed description of the invention

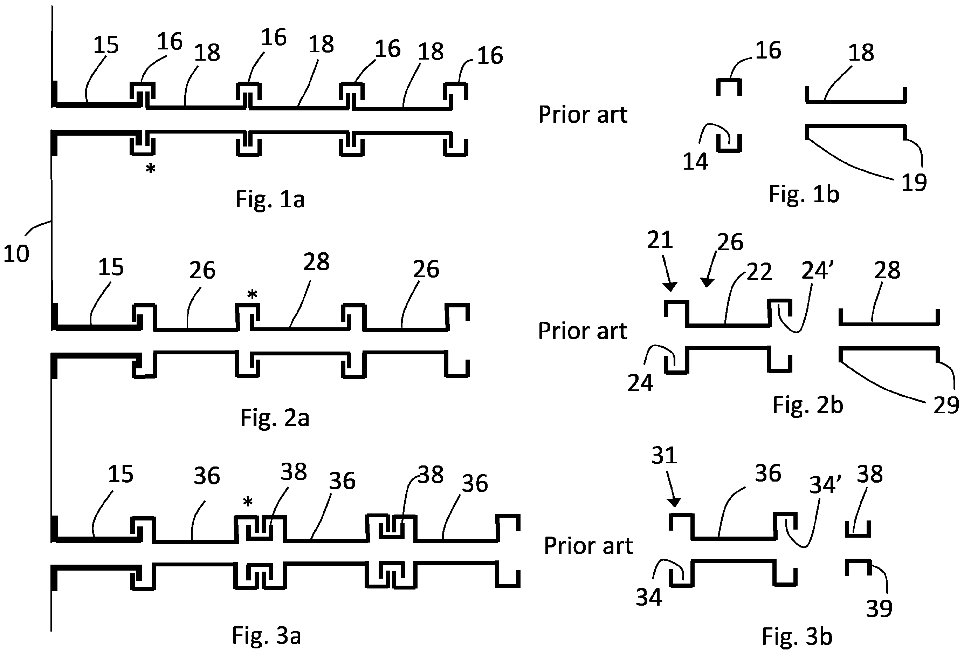

A prior art bend restrictor is illustrated on figures 1 to 3.

In the first example of prior art, as illustrated in fig 1a and 1b, the end section 15 is connected to an equipment wall 10. A pipe section 18 is connected to the end section 15 with a clamp section 16. The end section 15 comprises an outward extending flange at the end extending from the equipment wall 10. The pipe section 18 also comprises outward extending flanges 19 at each end thereof. The clamp section 16 comprises one inward facing flange 14 adapted to receive the outward facing extending flanges of two pipe sections or the end section 15 and the first pipe section. The cable to be protected by the bend restrictor is not shown in the schematic representation, but the longitudinal open passage therethrough is easily visible. In the schematic illustration it is also not visible that each pipe section and each clamp section are longitudinally split in at least two sections. In this prior art solution, the clamp sections have a very limited contribution to the length of the bend restrictor.

The prior art bend restrictor on figure 1a comprises three pipe sections and four clamp sections. If these are split in half the bend restrictor comprises fourteen pieces. These pieces are, if designed as in NO320897, connected with twenty-eight bolts.

A weak point of the prior art bend restrictor is at the position of the first clamped, marked with an asterisk (*). Three elements are connected at this point. The inward facing flange of the clamp section is designed such that a limited movement of the outward flange of the first pipe section in relation to the outward flange of the end section is possible such that a limited bending of the bend restrictor and the cable arranged therein is made possible. The outward flange of the pipe section at * is often the weakest point of the bend restrictor.

Figures 2a and 2b illustrate a second prior art bend restrictor using the same schematic method of illustration. The pipe section 28 is similar to the first prior art pipe section, the pipe sections may be split in the longitudinal direction, assembled with or without bolt connections or similar elements. When no bolts are used, the two or more pieces of the pipe section 28 are kept in place by the clamp sections.

The clamp section 26 has another design. The clamp section 26 comprise a longitudinal pipe shaped middle section 22 with a diameter similar to the diameter of the main part of the pipe section 28. The pipe section 28 also comprises outward extending flanges 29 at each end thereof. At each end the clamp section 26 comprises a radial extension 21 with an inward facing flange 24, 24' adapted to receive the outward facing extending flanges of the pipe sections 28 or the end section 15 and the first pipe section. Compared to the first prior art bend restrictor, the bend restrictor of figure 2a comprises no point where two pipe sections are directly connected within the same inward facing flange, in that the inward facing flanges are separated by the pipe shaped middle section 22. The bending forces are distributed between the two ends of the first clamp section 26 connected to the end section 15. The position * of the first pipe section flange is moved further away from the equipment wall 10, which increases bending moment capacity.

The design of the clamp section further provides for the clamp section to contribute considerably to the length of the bend restrictor. The bend restrictor illustrated on figure 2a has a similar length as the prior art bend restrictor of figure 1a but comprises less parts. The bend restrictor on figure 2a comprises one pipe section and two clamp sections, which makes six pieces if they are split in two.

Figures 3a and 3b illustrate a third prior art bend restrictor using the same schematic illustration. In this embodiment the clamp section 36 is similar to the clamp section of figure 2a. However, the pipe sections 38 are reduced in length. The pipe section 38 comprises outward extending flanges 39 at each end thereof. At each end the clamp section 36 comprises a radial extension 31 with an inward facing flange 34, 34' adapted to receive the outward facing extending flanges of the pipe sections 38 or the end section 15 and the first pipe section. The solution can be prepared without bolt connections between the parts of the longitudinally split pipe sections. Also, an increase in the bending moment capacity due to movement of the weak point further away from the wall 10 is achieved. With the third prior art solution a further increase in bending moment capacity is obtained due to the fact that with this design the radial extensions 31 of two adjacent clamp sections 36 can interact directly and transfer compression forces directly between the clamp sections without interacting with the pipe section 38 connected by the two clamp sections.

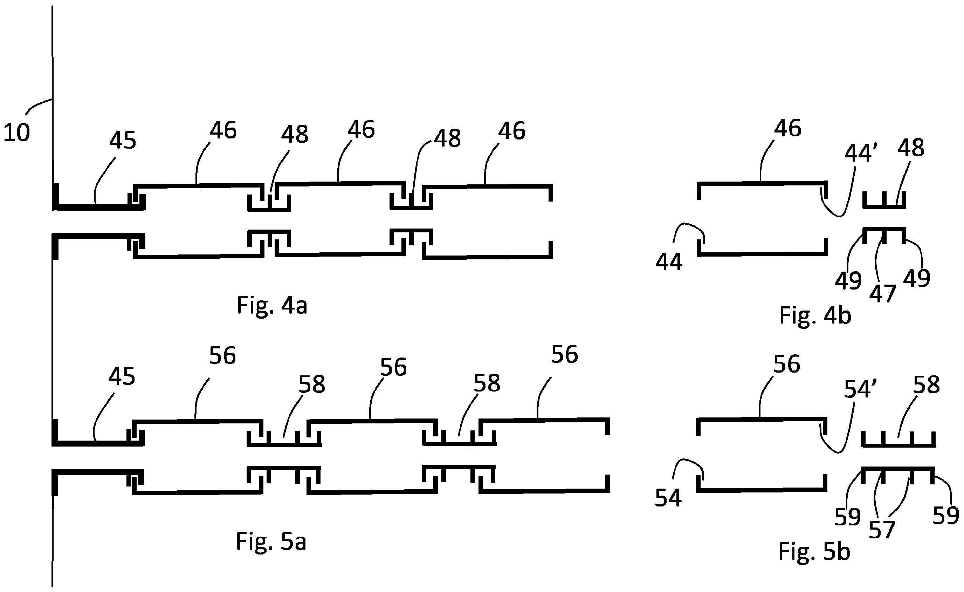

Figures 4a and 4b illustrate a first embodiment of the present invention using the same schematic method of illustration. The end section 45 is connected to an equipment wall 10. A pipe section 48 is connected to the end section 45 with a clamp section 46. The end section 45 comprises two outward extending flanges at the end extending from the equipment wall 10. The pipe section 48 also comprises outward extending end flanges 49 at each end thereof and at least an additional outward extending flange 47.

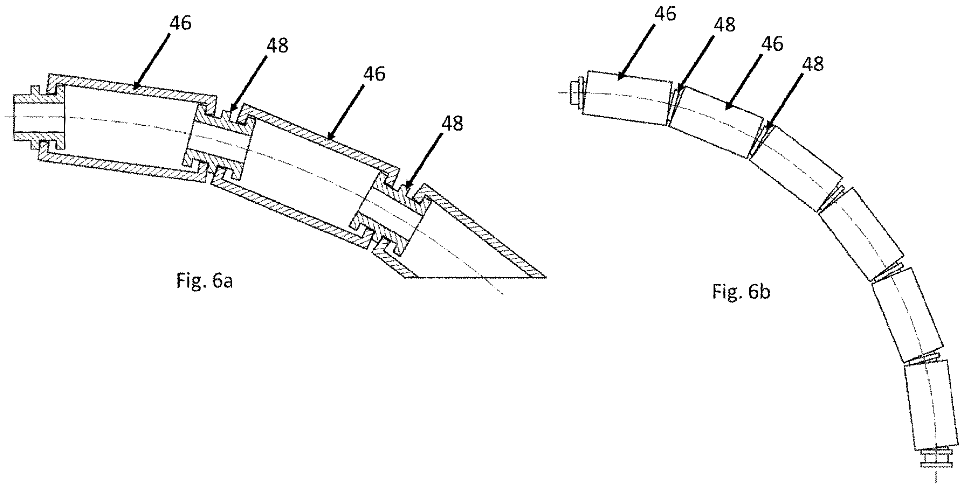

The distance between each of the end flange 49 and the additional flange 47 on the pipe section 48 shall enable the inward facing flange 44 on the clamp section 46 to move freely within a calculated limitation. This calculated limitation of movement controls the angle between each clamp section 46 and an adjacent clamp section 46 when the bend restrictor is locked into a rigid arc (see figs. 6a and 6b) and the calculated limitation is determined by the geometric relation between the diameter of the cable, the wall thickness of the pipe section 48, the height of the flange 49 on the pipe section 48, the thickness of the flange 44 of the clamp section 46, the angle between two adjacent clamp sections 46.

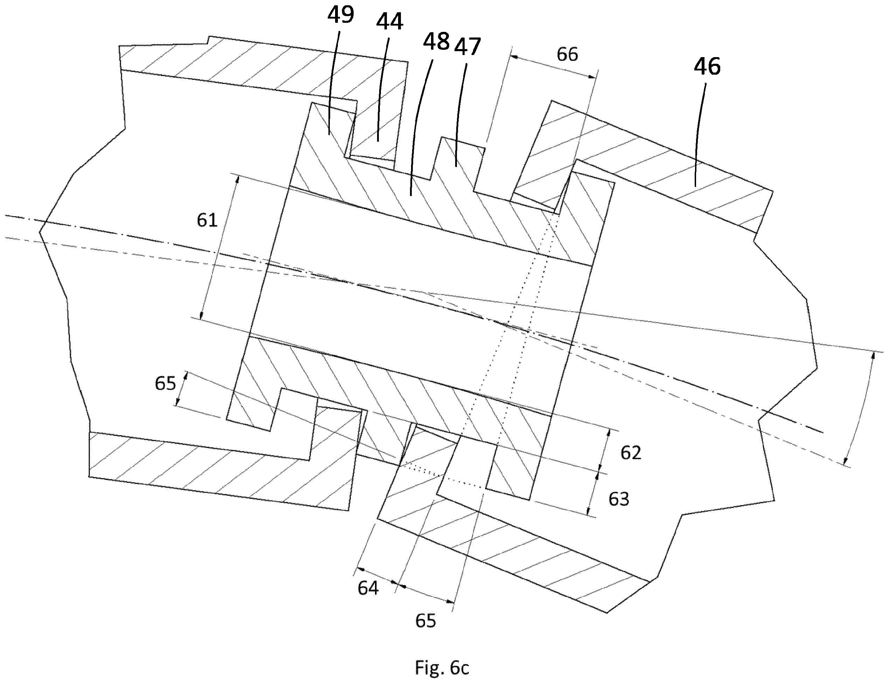

The distance between the outward extending end flange 49 and the additional flange 47 on the pipe 48 may be determined by the following equation and is illustrated on figure 6c:

CD: 61 : Cable diameter including clearance towards the inside of the pipe section 48

PWT: 62 : Wall thickness of the pipe section 48

PFH: 63 : Height of the outward extending pipe end flange 49 of the pipe section 48

CFT: 64 : Thickness of the inward facing flange 44 of the clamp section 46

ABC: 65 : Angle between the central axis of the pipe section 48 and the central axis of the adjacent clamp section 46

DBPF: 66 : Distance Between two Pipe Flanges (between an end flange 49 and an adjacent additional flange 47)

$$DBPF = ((CD + (2 \times PWT) + (2 \times PFH)) \times \tan(ABC)) + (CFT/\cos(ABC))$$

In addition, the locking radius characterizes the maximum bending of the cable allowed by the bend restrictor. In other words, when bent, a cable protected by the bend restrictor cannot have a bending radius under the locking radius, which describes the radius of the rigid arc below which the bend restrictor cannot move.

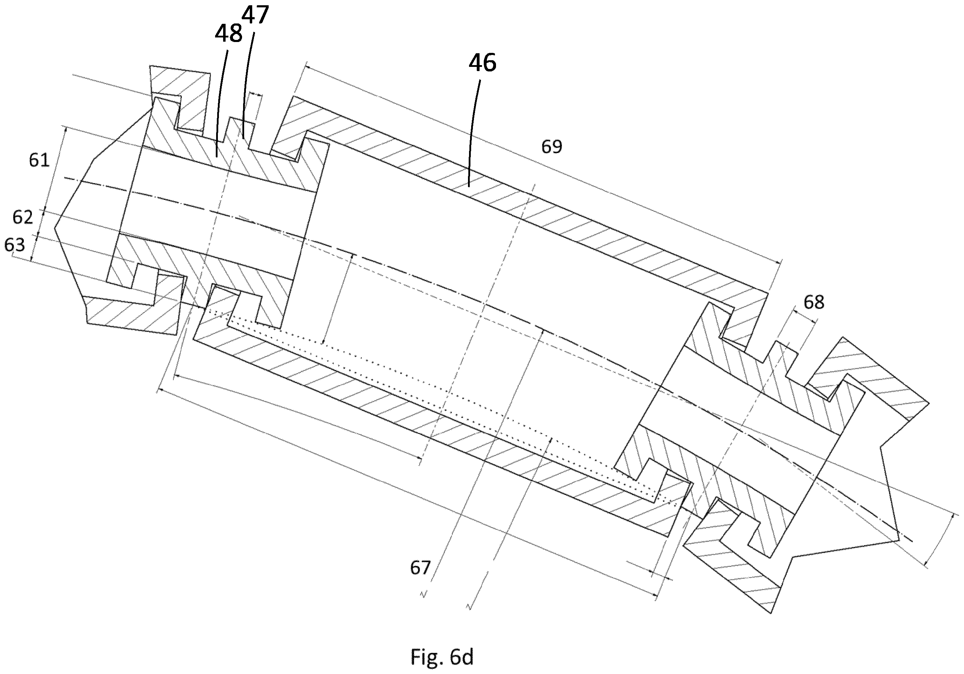

The locking radius may be determined by the following equation and is illustrated on figures 6c and 6d:

LR : 67 : Locking Radius, where bend restrictor is locked into a rigid arc

TPF : 68 : Thickness of additional outward facing pipe flange 47

LC : 69 : Length of Clamp section 46

$$LR = [(LC + (2 \times ((TPF/2) \times \cos(ABC)))) / (2 \times \sin(ABC))] + (CD/2 + PWT + PFH)$$

At each end the clamp section 46 comprises an inward facing flange 44, 44'. The cable to be protected by the bend restrictor is not shown in the schematic representation, but the longitudinal open passage therethrough is easily visible. In the schematic illustration it is also not visible that each clamp section may be longitudinally split in at least two sections and each pipe section may be longitudinally split in at least two sections. In this embodiment, the pipe sections have a very limited contribution to the length of the bend restrictor.

If the bend restrictor is prepared in steel for installation in moist climate including submerged in water the parts have to be protected from corrosion to obtain a reasonable life span. For this purpose, sacrificial anodes may be installed on each part or element.

Figures 5a and 5b illustrate a second embodiment of the present invention using the same schematic method of illustration. The end section 45 is connected to an equipment wall 10. A pipe section 58 is connected to the end section 45 with a clamp section 56. The end section 45 comprises two outward extending flanges at the end extending from the equipment wall 10. The pipe section 58 also comprises outward extending end flanges 59 at each end thereof and two additional outward extending flanges 57, at a certain distance from each of the adjacent end flanges 59, respectively. The distance between the end flange 59 and the adjacent additional flange 57 on the pipe section 58 shall enable the inward facing flange 54 on the clamp section 56 to move freely within a calculated limitation, as explained for the first embodiment.

Each end of the clamp section 56 comprises an inward facing flange 54, 54'. The cable to be protected by the bend restrictor is not shown in the schematic representation, but the longitudinal open passage therethrough is easily visible. In the schematic illustration it is also not visible that each clamp section may be longitudinally split in at least two sections and each pipe section may be longitudinally split in at least two sections. In this embodiment, the pipe sections have a very limited contribution to the length of the bend restrictor.

Figures 6a, 6b and 6c show a cross-sectional and a side views of a first alternative of a bend restrictor according to the first embodiment in further detail. In this illustration the bend restrictor is made of steel. A number of pipe sections 48 are connected with clamp sections 46 arranged therebetween. In this first alternative, the clamp sections 46 are a continuous cylinder. The assembly is much faster than in the prior art, especially due to the small size and weight of the pipe sections 48.

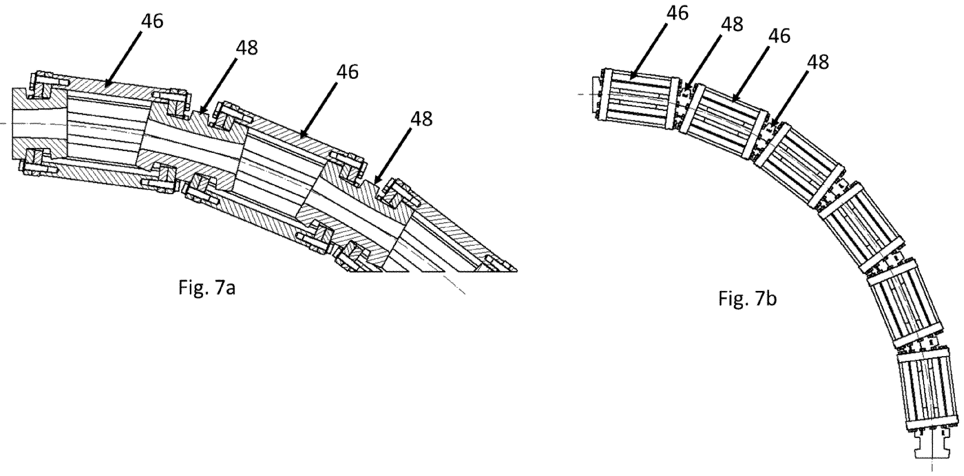

Figures 7a and 7b show a cross-sectional and a side views of a bend restrictor according to the second embodiment in further detail. In this illustration the bend restrictor is made of steel. A number of pipe sections 48 are connected with clamp sections 46 arranged therebetween. In this alternative, the clamp sections 46 are made of a plurality of elongated elements, here cylinders (tubes or bars) between two discs at each end. In other words the clamp sections 46 feature at least one aperture (here a plurality of apertures) which results in a substantial reduction in weight of the clamp. This alternative further improves the assembly speed for the bend restrictor, combining the effect of the small size and weight of the pipe sections 48 and a lighter clamp section than in the first alternative shown in figures 6a and 6b which can lead to an even faster assembly.

## Claims

1. Bend restrictor for restricting the bending of a cable comprising at least one pipe section (48,58) and at least one clamp section (46, 56)

   - wherein each pipe section (48,58) comprises an outward facing end flange (49,59) at each end, and at least an additional outward facing flange (47,57) arranged between the end flanges (49,59),
   - wherein the clamp section (46, 56) comprises an inward facing flange (44, 44', 54, 54') at each end, and a pipe shaped middle section therebetween,

   wherein the distance between each of the outward facing end flanges (49,59) and the additional outward facing flange (47,57) of the pipe section (48,58) is adapted to receive the inward facing flange (44, 44', 54, 54') of the clamp section (46, 56).

2. Bend restrictor according to claim 1, wherein the locking radius of the bend restrictor is equal to or over the minimum allowable bending radius of the cable.

3. Bend restrictor according to any of the preceding claims, wherein the distance between the outward facing end flange (49,59) and the adjacent additional outward facing flange (47,57) of the pipe section (48,58) is larger than the width of the inward facing flange (44, 44', 54, 54') of the clamp section (46, 56), so that the axis of the pipe section and the axis of the adjacent clamp section can have an inclination relative to each other.

4. Bend restrictor according to any of the preceding claims, wherein the distance between the outward facing end flange (49,59) and the adjacent additional outward facing flange (47,57) of the pipe section (48,58) is larger than the width of the inward facing flange (44, 44', 54, 54') of the clamp section (46, 56), so that a position of the central axis of the pipe section to the central axis of adjacent clamp section can vary between a first and second positions, wherein in the first position the axes are aligned and in the second position the axes are inclined relative to each other.

5. Bend restrictor according to any of the preceding claims, wherein a maximum angle between adjacent clamp (46,56) and pipe sections (48,58) is comprised between 1.5 and 9 degrees wherein the angle is measured between the central axis of the pipe section (48,58) and the central axis of the adjacent clamp section (46,56).

6. Bend restrictor according to any of the preceding claims, wherein the pipe section (48,58) comprises an outward facing flange (49,59) at each end, and at least two additional outward facing flanges (47,57) arranged between the end flanges (49,59).

7. Bend restrictor according to any of the preceding claims, wherein the pipe section (48,58) is split in the longitudinal direction into at least two parts.

8. Bend restrictor according to claim 7, wherein the at least two parts of the pipe section (48,58) are connectable through bolt connections, or through locking pin connections or through straps.

9. Bend restrictor according to any of the preceding claims, wherein the clamp section (46, 56) is split in the longitudinal direction into at least two parts.

10. Bend restrictor according to claim 9, wherein the at least two parts of the clamp section (46,56) are connectable through bolt connections, or through locking pin connections or through straps.

11. Bend restrictor according to any of the preceding claims, wherein the clamp section (46, 56) is made of a rigid material.

12. Bend restrictor according to any of the preceding claims, wherein the clamp section (46, 56) comprises a structural steel, a polymer or a fibre-reinforced polymer material.

13. Bend restrictor according to any of the preceding claims, wherein the pipe shaped middle section of the clamp section (46, 56) features at least one aperture.

14. Bend restrictor according to any of the preceding claims, wherein the pipe shaped middle section of the clamp section (46, 56) comprises a plurality of elongated elements extending between the two inward facing flanges (44, 44', 54, 54').

Fig. 1a

Fig. 1b

Prior art

Fig. 2a

Fig. 2b

Prior art

Fig. 3a

Fig. 3b

Prior art

Fig. 4a

Fig. 4b

Fig. 5a

Fig. 5b

Fig. 6b

Fig. 6a

46

66

48 47

49 44

62

63

65

64

61

65

Fig. 6c

Fig. 6d

Fig. 7b

Fig. 7a

Europäisches Patentamt

European Patent Office

Office européen des brevets

# EUROPEAN SEARCH REPORT

Application Number

EP 22 30 6918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 206 889 963 U (UNIV HOHAI) 16 January 2018 (2018-01-16) * abstract; figures 2-5 * | 1-14 | INV. E21B17/01 E21B17/10 F16L3/015 |
| A | FR 2 889 557 A1 (TECHNIP FRANCE SA [FR]) 9 February 2007 (2007-02-09) * abstract; figures 2,3 * | 1-14 | F16L1/12 |

TECHNICAL FIELDS SEARCHED (IPC)

E21B
F16L

The present search report has been drawn up for all claims

| Place of search | Date of completion of the search | Examiner |
|---|---|---|
| Munich | 3 April 2023 | Strømmen, Henrik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 30 6918**

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2023

| Patent document cited in search report | | Publication date | Patent family member(s) | | Publication date |
|---|---|---|---|---|---|
| CN 206889963 | U | 16-01-2018 | NONE | | |
| FR 2889557 | A1 | 09-02-2007 | AT | 430870 T | 15-05-2009 |
| | | | AU | 2006277852 A1 | 15-02-2007 |
| | | | BR | PI0614532 A2 | 27-11-2012 |
| | | | EP | 1913229 A1 | 23-04-2008 |
| | | | FR | 2889557 A1 | 09-02-2007 |
| | | | NO | 337882 B1 | 04-07-2016 |
| | | | US | 2008317555 A1 | 25-12-2008 |
| | | | WO | 2007017574 A1 | 15-02-2007 |

EPO FORM P0459

For more details about this annex : see Official Journal of the European Patent Office, No. 12/82

**EP 4 386 175 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3564569 A1